# EUROPÄISCHE PATENTANMELDUNG

(11) **EP 4 201 196 A1**
(43) Veröffentlichungstag der Anmeldung: **28.06.2023**
(21) Anmeldenummer: 22207099.7
(22) Anmeldetag: 14.11.2022
(51) Int. Cl.: A01G 9/02, A01G 9/029

(54) **PFLANZSUBSTRATSYSTEM UND PFLANZVORRICHTUNG MIT EINEM PFLANZSUBSTRATSYSTEM**

(30) Priorität: 14.12.2021 DE 102021133076
(71) Anmelder: Miele & Cie. KG, 33332 Gütersloh (DE)
(72) Erfinder: Denkhaus, Erik, 81249 München (DE)

(57) **Zusammenfassung**

Die Erfindung betrifft ein Pflanzsubstratsystem (6) zur Aufzucht von Pflanzen, umfassend ein Pflanzsubstrat (8) und ein Stabilisierungsmittel (10), wobei das Stabilisierungsmittel (10) derart ausgebildet und angeordnet ist, dass das Stabilisierungsmittel (10) das Pflanzsubstrat (8) im Wesentlichen in einer vorher festgelegten Form versandfest fixiert, dadurch gekennzeichnet, dass das Stabilisierungsmittel (10) lediglich als eine wasserlösliche Hülle für das Pflanzsubstrat (8) ausgebildet ist, wobei das Stabilisierungsmittel (10) das Pflanzsubstrat (8) zumindest teilweise umgibt.

## Beschreibung

Die Erfindung betrifft ein Pflanzsubstratsystem zur Aufzucht von Pflanzen der im Oberbegriff des Patentanspruchs 1 genannten Art und eine Pflanzvorrichtung mit einem Pflanzsubstratsystem.

Derartige Pflanzsubstratsysteme zur Aufzucht von Pflanzen und Pflanzvorrichtungen mit Pflanzsubstratsystemen sind aus dem Stand der Technik bereits in einer Vielzahl von voneinander verschiedenen Ausführungsformen vorbekannt. Die bekannten Pflanzsubstratsysteme umfassen dabei ein Pflanzsubstrat und ein Stabilisierungsmittel, wobei das Stabilisierungsmittel derart ausgebildet und angeordnet ist, dass das Stabilisierungsmittel das Pflanzsubstrat im Wesentlichen in einer vorher festgelegten Form versandfest fixiert.

Der Erfindung stellt sich somit das Problem, ein Pflanzsubstratsystem zur Aufzucht von Pflanzen und eine damit ausgestattete Pflanzvorrichtung zu verbessern.

Erfindungsgemäß wird dieses Problem durch ein Pflanzsubstratsystem mit den Merkmalen des Patentanspruchs 1 gelöst, das dadurch gekennzeichnet ist, dass das Stabilisierungsmittel lediglich als eine wasserlösliche Hülle für das Pflanzsubstrat ausgebildet ist, wobei das Stabilisierungsmittel das Pflanzsubstrat zumindest teilweise umgibt. Ferner wird dieses Problem durch eine Pflanzvorrichtung mit den Merkmalen des Patentanspruchs 8 gelöst. Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass ein Pflanzsubstratsystem zur Aufzucht von Pflanzen und eine damit ausgestattete Pflanzvorrichtung verbessert sind. Aufgrund der erfindungsgemäßen Ausbildung des Pflanzsubstratsystems und der Pflanzvorrichtung ist es zum einen möglich, das Pflanzsubstrat mittels des Stabilisierungsmittels, beispielsweise für einen Versand oder dergleichen, ausreichend zu stabilisieren, so dass die vorher festgelegte Form des Pflanzsubstrats im Wesentlichen erhalten bleibt und nicht durch die Handhabung des Pflanzsubstratsystems bei Lagerung und Transport beschädigt wird. Zum anderen wird das Pflanzsubstrat dabei, also bei dessen Stabilisierung mit dem Stabilisierungsmittel, nicht so stark verdichtet, dass eine nachfolgende Verwendung des Pflanzsubstrats zur Aufzucht von Pflanzen dadurch nicht behindert wird. Ferner kann eine erfindungsgemäße Stabilisierung des Pflanzsubstrats sehr einfach und kostengünstig automatisiert werden, da weder eine wesentliche Verdichtung des Pflanzsubstrats noch eine Verklebung des Pflanzsubstrats zur Stabilisierung erforderlich ist. Entsprechend reduzieren sich auch die Kosten für die Herstellung des Pflanzsubstratsystems. Darüber hinaus ist das Pflanzsubstrat auf umweltschonende Art und Weise, zumindest teilweise, eingehüllt und damit vor schädlichen Umwelteinflüssen geschützt. Mittels der erfindungsgemäßen Ausbildung des Pflanzsubstratsystems zur Aufzucht von Pflanzen ist eine im Wesentlichen sterile und damit keimfreie Herstellung des Pflanzsubstrats ermöglicht, wobei dieser Zustand bis zur Ankunft des Pflanzsubstratsystems beim Endkunden mit wenig Aufwand bewahrt werden kann.

Grundsätzlich ist das erfindungsgemäße Pflanzsubstratsystem nach Art, Funktionsweise, Material und Dimensionierung in weiten geeigneten Grenzen frei wählbar. Beispielsweise kann das als Hülle ausgebildete Stabilisierungsmittel lediglich einschichtig, also einlagig, oder als eine Mehrzahl von Schichten, also Lagen, ausgebildet sein.

Eine besonders vorteilhafte Weiterbildung des erfindungsgemäßen Pflanzsubstratsystems sieht vor, dass das Stabilisierungsmittel das Pflanzsubstrat umlaufend umschließt, bevorzugt vollständig umschließt. Auf diese Weise ist der Schutz vor schädlichen Umwelteinflüssen weiter verbessert. Dies gilt insbesondere für die bevorzugte Ausführungsform dieser Weiterbildung.

Eine weitere vorteilhafte Weiterbildung des erfindungsgemäßen Pflanzsubstratsystems sieht vor, dass das Stabilisierungsmittel als eine wasserlösliche Membran ausgebildet ist, bevorzugt, dass das Stabilisierungsmittel als eine Polyvinylalkohol-Folie ausgebildet ist. Hierdurch ist das erfindungsgemäße Stabilisierungsmittel auf für Pflanzsubstratsysteme besonders vorteilhafte Art und Weise realisiert. Diese gilt insbesondere für die bevorzugte Ausführungsform dieser Weiterbildung. Polyvinylalkohol-Folien werden auch abgekürzt als PVAL-Folien oder PVOH-Folien bezeichnet.

Eine andere vorteilhafte Weiterbildung des erfindungsgemäßen Pflanzsubstratsystems sieht vor, dass das Stabilisierungsmittel gleichzeitig als eine Schrumpffolie ausgebildet ist. Auf diese Weise ist die Herstellung des erfindungsgemäßen Pflanzsubstratsystems weiter vereinfacht, so dass beispielsweise eine Automatisierung der Herstellung ebenfalls vereinfacht ist.

Eine weitere besonders vorteilhafte Weiterbildung des erfindungsgemäßen Pflanzsubstratsystems sieht vor, dass das Pflanzsubstratsystem zusätzlich mindestens einen in dem Pflanzsubstrat angeordneten Pflanzensamen und/oder mindestens eine in dem Pflanzsubstrat angeordnete Nährstoffquelle aufweist, bevorzugt, dass in dem Pflanzsubstrat eine Mehrzahl von Pflanzensamen und/oder eine Mehrzahl von Nährstoffquellen verteilt angeordnet sind/ist. Hierdurch ist der Grad der Vorkonfektion des erfindungsgemäßen Pflanzsubstratsystems weiter gesteigert, so dass ein Endkunde das erfindungsgemäße Pflanzsubstratsystem lediglich noch in ein Pflanzbehältnis einer Pflanzvorrichtung einsetzen muss. Entsprechend vereinfacht sich die Handhabung für den Endkunden wesentlich. Ferner ist dadurch ein Pflanzerfolg gewährleistet, da das Pflanzsubstratsystem gemäß der vorliegenden Weiterbildung bereits größtenteils, bevorzugt vollständig, für die Aufzucht der mindestens einen Pflanze vorbereitet ist. Dies gilt insbesondere für die bevorzugte Ausführungsform dieser Weiterbildung. Bei der mindestens einen Nährstoffquelle kann es sich beispielsweise um einzelne Nährstoffpartikel oder Nährstoffagglomerate handeln. Denkbar ist auch, dass die mindestens eine Nährstoffquelle aus einer Mehrzahl von voneinander verschiedenen Nährstoffen zusammengesetzt ist und/oder, dass bei einer Mehrzahl von Nährstoffquellen voneinander verschiedene Nährstoffe in dem Pflanzsubstrat verteilt angeordnet sind.

Eine andere vorteilhafte Weiterbildung des erfindungsgemäßen Pflanzsubstratsystems sieht vor, dass das Stabilisierungsmittel gleichzeitig als eine chemische Barriere ausgebildet ist, wobei das Stabilisierungsmittel das Pflanzsubstrat oder das Pflanzsubstrat und den darin angeordneten Pflanzensamen und/oder die darin angeordnete Nährstoffquelle zumindest teilweise, bevorzugt vollständig, vor schädlichen Umwelteinflüssen schützt. Auf diese Weise ist der Schutz vor für das Pflanzsubstratsystem schädlichen Umwelteinflüssen weiter verbessert. Dies gilt insbesondere für die bevorzugte Ausführungsform dieser Weiterbildung.

Eine weitere vorteilhafte Weiterbildung des erfindungsgemäßen Pflanzsubstratsystems sieht vor, dass das Stabilisierungsmittel auf einer dem Pflanzsubstrat zugewandten Innenseite des Stabilisierungsmittels und/oder auf einer dem Pflanzsubstrat abgewandten Außenseite des Stabilisierungsmittels bedruckbar ausgebildet ist. Hierdurch ist es möglich, beispielsweise Handlungsanweisungen zur Handhabung des erfindungsgemäßen Pflanzsubstratsystems, mit lediglich geringem zusätzlichem Aufwand, in direktem körperlichem Zusammenhang mit dem erfindungsgemäßen Pflanzsubstratsystem zu positionieren. Im Unterschied zu beispielsweise auf die Hülle aufgeklebten Etiketten oder dergleichen ist die vorgenannte Art der Bedruckung im Wesentlichen rückstandsfrei. Eine nachträgliche Entfernung der vorgenannten Etiketten oder dergleichen entfällt ebenfalls. Entsprechend ist der Bedienkomfort bei der Handhabung des erfindungsgemäßen Pflanzsubstratsystems, insbesondere für den Endkunden, wesentlich verbessert.

Grundsätzlich ist die erfindungsgemäße Pflanzvorrichtung zur Aufzucht von Pflanzen nach Art, Funktionsweise, Material und Dimensionierung ebenfalls in weiten geeigneten Grenzen frei wählbar.

Eine vorteilhafte Weiterbildung der erfindungsgemäßen Pflanzvorrichtung sieht vor, dass das Pflanzbehältnis und das Pflanzsubstratsystem derart aufeinander abgestimmt ausgebildet sind, dass das Pflanzsubstratsystem unmittelbar und direkt in das Pflanzbehältnis einsetzbar und zur Aufzucht von Pflanzen nutzbar ist. Auf diese Weise ist der Bedienkomfort für den Endkunden zusätzlich verbessert, da der Endkunde lediglich das erfindungsgemäße Pflanzsubstratsystem gemäß einem der Ansprüche 1 bis 7 in die erfindungsgemäße Pflanzvorrichtung einsetzen muss. Weitere vorbereitende Arbeiten zur Aufzucht von Pflanzen mittels des erfindungsgemäßen Pflanzsubstratsystems sind nicht erforderlich. Er muss also beispielsweise weder eine Folie oder eine andere Art von Umhüllung von dem Pflanzsubstrat entfernen, noch das Pflanzsubstrat auflockern. Stattdessen kann der Endkunde sofort mit der Aufzucht von Pflanzen beginnen, indem er beispielsweise Pflanzensamen oder Pflanzensamen und Nährstoffe in dem Pflanzsubstrat verteilt anordnet. Sofern das erfindungsgemäße Pflanzsubstratsystem zum Beispiel bereits den mindestens einen Pflanzensamen oder den mindestens einen Pflanzensamen und die mindestens eine Nährstoffquelle aufweist, ist die Nutzung der erfindungsgemäßen Pflanzvorrichtung durch den Endkunden zusätzlich vereinfacht.

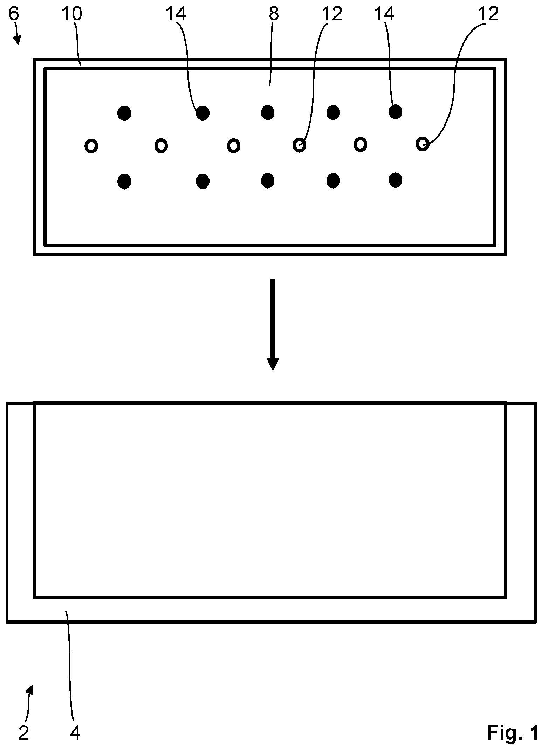

Ein Ausführungsbeispiel der Erfindung ist in der Zeichnung rein schematisch dargestellt und wird nachfolgend näher beschrieben. Es zeigt die einzige Figur
- Figur 1: ein Ausführungsbeispiel der erfindungsgemäßen Pflanzvorrichtung mit dem erfindungsgemäßen Pflanzsubstratsystem in einer geschnittenen Explosionsdarstellung.

In der Fig. 1 ist ein Ausführungsbeispiel der erfindungsgemäßen Pflanzvorrichtung zur Aufzucht von nicht näher dargestellten Pflanzen mit dem erfindungsgemäßen Pflanzsubstratsystem rein exemplarisch dargestellt. Die erfindungsgemäße Pflanzvorrichtung mit dem erfindungsgemäßen Pflanzsubstratsystem ist zur Nutzung durch einen ebenfalls nicht dargestellten Endkunden geeignet ausgebildet.

Die erfindungsgemäße Pflanzvorrichtung 2 umfasst ein Pflanzbehältnis 4 und ein in dem Pflanzbehältnis 4 angeordnetes Pflanzsubstratsystem 6, wobei das Pflanzsubstratsystem 6 ein Pflanzsubstrat 8 und ein Stabilisierungsmittel 10 aufweist, und wobei das Stabilisierungsmittel 10 derart ausgebildet und angeordnet ist, dass das Stabilisierungsmittel 10 das Pflanzsubstrat 8 im Wesentlichen in einer vorher festgelegten Form versandfest fixiert, nämlich derart, dass das Stabilisierungsmittel 10 lediglich als eine wasserlösliche Hülle für das Pflanzsubstrat 8 ausgebildet ist, wobei das Stabilisierungsmittel 10 das Pflanzsubstrat 8 bei dem vorliegenden Ausführungsbeispiel vollständig umgibt, also vollständig umschließt.

Das Stabilisierungsmittel 10 ist hier als eine wasserlösliche Membran, nämlich eine Polyvinylalkohol-Folie, ausgebildet. Ferner ist das Stabilisierungsmittel 10 gleichzeitig als eine Schrumpffolie ausgebildet.

Das Pflanzsubstratsystem 6 weist zusätzlich eine Mehrzahl von in dem Pflanzsubstrat 8 angeordneten Pflanzensamen 12 und eine Mehrzahl von als Nährstoffagglomerate ausgebildete und ebenfalls in dem Pflanzsubstrat 8 verteilt angeordnete Nährstoffquellen 14 auf. Die Pflanzensamen 12 sind hier jeweils gleichartig ausgebildet. Die als Nährstoffagglomerate ausgebildeten Nährstoffquellen 14 sind jeweils aus einem Konglomerat von voneinander verschiedenen Nährstoffen zusammengemischt. Jedoch sind auch andere Ausführungsformen denkbar, bei denen zum einen sich die Mehrzahl von Pflanzensamen aus voneinander verschiedenartigen Pflanzensamen zusammensetzt und/oder zum anderen die Mehrzahl von Nährstoffquellen lediglich oder jeweils lediglich einer Art von Nährstoff zugeordnet sind.

Neben der mechanischen Stabilisierung des Pflanzsubstrats 8 mittels des Stabilisierungsmittels 10 ist das Stabilisierungsmittel 10 bei dem vorliegenden Ausführungsbeispiel gleichzeitig als eine chemische Barriere ausgebildet, wobei das Stabilisierungsmittel 10 das Pflanzsubstrat 8 und die darin angeordneten Pflanzensamen 12 und Nährstoffquellen 14 im Wesentlichen vollständig vor für das Pflanzsubstrat 8 und die Pflanzensamen 12 sowie die Nährstoffquellen 14 nachteiligen Umwelteinflüssen schützt.

Zur leichteren Handhabung des erfindungsgemäßen Pflanzsubstratsystems ist das Stabilisierungsmittel 10 hier auf einer dem Pflanzsubstrat 8 abgewandten Außenseite des Stabilisierungsmittels 10 bedruckbar ausgebildet und bedruckt. Die Bedruckung ist in der Fig. 1 nicht dargestellt.

Bei dem vorliegenden Ausführungsbeispiel sind das Pflanzbehältnis 4 und das Pflanzsubstratsystem 6 der Pflanzvorrichtung 2 derart aufeinander abgestimmt ausgebildet, dass das Pflanzsubstratsystem 6 unmittelbar und direkt in das Pflanzbehältnis 4 einsetzbar und zur Aufzucht von Pflanzen nutzbar ist. Es sind hier also keinerlei weitere Vorbereitungshandlungen beispielsweise seitens eines Endkunden erforderlich, um mittels der Pflanzvorrichtung 2 Pflanzen aufzuziehen.

Nachfolgend wird die Funktionsweise der erfindungsgemäßen Pflanzvorrichtung mit dem erfindungsgemäßen Pflanzsubstratsystem gemäß dem vorliegenden Ausführungsbeispiel anhand der Fig. 1 näher erläutert.

Zunächst wird das Pflanzsubstratsystem 6 im Werk hergestellt, so dass sich das Pflanzsubstratsystem 6 gemäß der obigen Ausführungen ergibt. Da das als Hülle ausgebildete Stabilisierungsmittel 10 gleichzeitig als eine Schrumpffolie ausgebildet ist, ergeben sich wesentliche Vorteile bei der Herstellung. Beispielsweise ist die Herstellung hierdurch sehr einfach automatisierbar.

Dieses Pflanzsubstratsystem 6 wird anschließend an den Endkunden, beispielsweise eine Privatperson, auf einem der üblichen Wege versandt. Hierbei ist das Pflanzsubstrat 8 des Pflanzsubstratsystems 6 mit den darin verteilt angeordneten Pflanzensamen 12 und Nährstoffquellen 14 mittels des Stabilisierungsmittels 10 zum einen mechanisch im Wesentlichen vor einer ungewünschten Formveränderung des Pflanzsubstrats 8 und zum anderen chemisch im Wesentlichen vor ungewünschten Umwelteinflüssen geschützt.

Sobald das Pflanzsubstratsystem 6 bei dem Endkunden angekommen ist, braucht der Endkunde das Pflanzsubstratsystem 6 lediglich in einen beispielsweise bereits vorhandenen Pflanzbehälter 4 der Pflanzvorrichtung 2 hineinzugeben, ohne, dass der Endkunde das Pflanzsubstrat 8 zum einen aus dem als Hülle ausgebildeten Stabilisierungsmittel 10 des Pflanzsubstratsystems 6 herausnehmen und zum anderen die Pflanzensamen 12 und die Nährstoffquellen 14 in dem Pflanzensubstrat 8 verteilen muss. Stattdessen kann der Endkunde sofort mit der Aufzucht der Pflanzen aus den Pflanzensamen 12 beginnen, indem der Endkunde das jetzt in dem Pflanzbehälter 4 der Pflanzvorrichtung 2 befindliche Pflanzsubstratsystem 6 mit Wasser übergießt. Dabei löst sich das als Hülle ausgebildete Stabilisierungsmittel 10 mit der Zeit auf. Die Pflanzensamen 12 können keimen und Pflanzenschösslinge treiben.

Aufgrund der erfindungsgemäßen Ausbildung des Pflanzsubstratsystems und der Pflanzvorrichtung gemäß dem vorliegenden Ausführungsbeispiel ist es somit zum einen möglich, das Pflanzsubstrat 8 mittels des Stabilisierungsmittels 10 für einen Versand ausreichend zu stabilisieren, so dass die vorher festgelegte Form des Pflanzsubstrats 8 im Wesentlichen erhalten bleibt und nicht durch die Handhabung des Pflanzsubstratsystems 6 bei Lagerung und Transport beschädigt wird. Zum anderen wird das Pflanzsubstrat 8 dabei, also bei dessen Stabilisierung mit dem Stabilisierungsmittel 10, nicht so stark verdichtet, dass eine nachfolgende Verwendung des Pflanzsubstrats 8 zur Aufzucht von Pflanzen dadurch nicht behindert wird. Ferner kann die erfindungsgemäße Stabilisierung des Pflanzsubstrats 8 sehr einfach und kostengünstig automatisiert werden, da weder eine wesentliche Verdichtung des Pflanzsubstrats 8 noch eine Verklebung des Pflanzsubstrats 8 zur Stabilisierung erforderlich ist. Entsprechend reduzieren sich auch die Kosten für die Herstellung des Pflanzsubstratsystems 6. Darüber hinaus ist das Pflanzsubstrat 8 auf umweltschonende Art und Weise vollständig eingehüllt und damit vor schädlichen Umwelteinflüssen wirksam geschützt. Mittels des Pflanzsubstratsystems 6 zur Aufzucht von Pflanzen ist eine im Wesentlichen sterile und damit keimfreie Herstellung des Pflanzsubstrats 8 ermöglicht, wobei dieser Zustand bis zur Ankunft des Pflanzsubstratsystems 6 beim Endkunden mit wenig Aufwand bewahrt werden kann.

Die Erfindung ist jedoch nicht auf das vorliegende Ausführungsbeispiel beschränkt. Insbesondere ist die Erfindung nicht auf den Aufbau und die fertigungstechnischen Details des Ausführungsbeispiels begrenzt.

## Patentansprüche

1. Pflanzsubstratsystem (6) zur Aufzucht von Pflanzen, umfassend ein Pflanzsubstrat (8) und ein Stabilisierungsmittel (10), wobei das Stabilisierungsmittel (10) derart ausgebildet und angeordnet ist, dass das Stabilisierungsmittel (10) das Pflanzsubstrat (8) im Wesentlichen in einer vorher festgelegten Form versandfest fixiert, **dadurch gekennzeichnet, dass** das Stabilisierungsmittel (10) lediglich als eine wasserlösliche Hülle für das Pflanzsubstrat (8) ausgebildet ist, wobei das Stabilisierungsmittel (10) das Pflanzsubstrat (8) zumindest teilweise umgibt.

2. Pflanzsubstratsystem (6) nach Anspruch 1, **dadurch gekennzeichnet, dass** das Stabilisierungsmittel (10) das Pflanzsubstrat (8) umlaufend umschließt, bevorzugt vollständig umschließt.

3. Pflanzsubstratsystem (6) nach Anspruch 1 oder 2, **dadurch gekennzeichnet, dass** das Stabilisierungsmittel (10) als eine wasserlösliche Membran ausgebildet ist, bevorzugt, dass das Stabilisierungsmittel (10) als eine Polyvinylalkohol-Folie ausgebildet ist.

4. Pflanzsubstratsystem (6) nach einem der Ansprüche 1 bis 3, **dadurch gekennzeichnet, dass** das Stabilisierungsmittel (10) gleichzeitig als eine Schrumpffolie ausgebildet ist.

5. Pflanzsubstratsystem (6) nach einem der Ansprüche 1 bis 4, **dadurch gekennzeichnet, dass** das Pflanzsubstratsystem (6) zusätzlich mindestens einen in dem Pflanzsubstrat (8) angeordneten Pflanzensamen (12) und/oder mindestens eine in dem Pflanzsubstrat (8) angeordnete Nährstoffquelle (14) aufweist, bevorzugt, dass in dem Pflanzsubstrat (8) eine Mehrzahl von Pflanzensamen (12) und/oder eine Mehrzahl von Nährstoffquellen (14) verteilt angeordnet sind/ist.

6. Pflanzsubstratsystem (6) nach einem der Ansprüche 1 bis 5, **dadurch gekennzeichnet, dass** das Stabilisierungsmittel (10) gleichzeitig als eine chemische Barriere ausgebildet ist, wobei das Stabilisierungsmittel (10) das Pflanzsubstrat oder das Pflanzsubstrat (8) und den darin angeordneten Pflanzensamen (12) und/oder die darin angeordnete Nährstoffquelle (14) zumindest teilweise, bevorzugt vollständig, vor schädlichen Umwelteinflüssen schützt.

7. Pflanzsubstratsystem (6) nach einem der Ansprüche 1 bis 6, **dadurch gekennzeichnet, dass** das Stabilisierungsmittel (10) auf einer dem Pflanzsubstrat zugewandten Innenseite des Stabilisierungsmittels und/oder auf einer dem Pflanzsubstrat (8) abgewandten Außenseite des Stabilisierungsmittels (10) bedruckbar ausgebildet ist.

8. Pflanzvorrichtung (2) zur Aufzucht von Pflanzen, umfassend ein Pflanzbehältnis (4) und ein in dem Pflanzbehältnis (4) angeordnetes Pflanzsubstratsystem (6), **dadurch gekennzeichnet, dass** das Pflanzsubstratsystem (6) nach einem der Ansprüche 1 bis 7 ausgebildet ist.

9. Pflanzvorrichtung (2) nach Anspruch 8, **dadurch gekennzeichnet, dass** das Pflanzbehältnis (4) und das Pflanzsubstratsystem (6) derart aufeinander abgestimmt ausgebildet sind, dass das Pflanzsubstratsystem (6) unmittelbar und direkt in das Pflanzbehältnis (4) einsetzbar und zur Aufzucht von Pflanzen nutzbar ist.
